# EUROPEAN PATENT APPLICATION

(11) **EP 4 751 950 A1**
(43) Date of publication of application: **03.06.2026**
(21) Application number: 25218608.5
(22) Date of filing: 26.11.2025
(51) Int. Cl.: B60J 5/06, E05D 15/10, E05F 15/655

(54) **SLIDE DOOR SUPPORT STRUCTURE**

(30) Priority: 02.12.2024 JP 2024209381; 01.10.2025 JP 2025165152
(71) Applicant: AISIN CORPORATION, Aichi 448-8650 (JP)
(72) Inventor: MORI, Masato, Kariya, 448-8650 (JP); FUKAMI, Yuta, Kariya, 448-8650 (JP); SATO, Eisuke, Kariya, 448-8650 (JP)
(74) Representative: TBK

(57) **Abstract**

A slide door support structure (20, 20A, 20B) includes: a slide support mechanism (22, 22A, 22B) slidably supporting a door (13) that can open and close a door opening (11) of a vehicle body (12), and including a slide rail (60) in a mechanism arrangement portion (S4) on a vehicle body (12) side; a cover member (900, 900A, 900B) supported by the vehicle body (12) so as to be movable between a first position where the cover member (900, 900A, 900B) does not hinder the door (13) from moving with the aid of the slide support mechanism (22, 22A, 22B) and a second position where the cover member (900, 900A, 900B) at least partially closes the mechanism arrangement portion (S4); and a drive mechanism (92, 92B) for the cover member (900, 900A, 900B). The cover member (900, 900A, 900B) is located at the second position in the door (13) closed state. The drive mechanism (92, 92B) moves the cover member (900, 900A, 900B) from the second position to the first position in mechanical conjunction with movement of the door (13) to an open state.

## Description

### TECHNICAL FIELD

The present disclosure relates to a slide door support structure.

### BACKGROUND DISCUSSION

Regarding a slide support mechanism that slidably supports a door that closes a door opening of a vehicle body in a closed state, a technique of connecting a door-side mechanism and a vehicle body-side mechanism through a rail cover opening provided in the vehicle body is known (for example, JP 2013-132910 A).

However, in the conventional technique as described above, there is a problem that a part of the slide support mechanism becomes visible through the rail cover opening in the door closed state, and the appearance is not good. In addition, in this case, there is also a problem that environmental resistance is not good because a part of the slide support mechanism is exposed to the external environment through the rail cover opening in the door closed state.

A need thus exists for a slide door support structure that is reduced in visibility (external exposure degree) of a slide support mechanism in a door closed state in a manner that does not inhibit movement of a sliding door.

### SUMMARY

According to an aspect, there is provided a slide door support structure including:
a slide support mechanism that slidably supports a door that allows a door opening of a vehicle body to be opened and closed, the slide support mechanism including a slide rail in a mechanism arrangement portion on a vehicle body side;
a cover member that is supported by the vehicle body in such a manner as to be movable between a first position where the cover member does not hinder the door from moving with the aid of the slide support mechanism and a second position where the cover member at least partially closes the mechanism arrangement portion; and
a drive mechanism for the cover member,
the cover member being located at the second position in a closed state of the door, and
the drive mechanism moving the cover member from the second position to the first position in mechanical conjunction with movement of the door to an open state.

In one aspect, according to the present disclosure, the visibility (external exposure degree) of the slide support mechanism in the door closed state can be reduced in a manner in which movement of the sliding door is not hindered.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a side view schematically illustrating a part of a vehicle including a slide door support structure of the present embodiment;
Fig. 2 is an explanatory view of a second slide support mechanism and a cover mechanism thereof, and is a side view illustrating an appearance example of a door in a fully closed state and a vehicle body around the door;
Fig. 3 is a side view illustrating a state in which a cover member is removed from the state of Fig. 2;
Fig. 4 is a perspective view of the cover member as viewed from the inner side in the vehicle width direction;
Fig. 5 is a perspective view of the state of Fig. 2 as viewed from the inner side in the vehicle width direction;
Fig. 6 is an enlarged view of a part of Fig. 5;
Fig. 7 is a plan view illustrating a top view of a central slide rail;
Fig. 8 is an explanatory view of operation (part 1) of a cover drive mechanism;
Fig. 9 is an explanatory view of operation (part 2) of the cover drive mechanism;
Fig. 10 is an explanatory view of operation (part 3) of the cover drive mechanism;
Fig. 11 is a side view illustrating the state of the cover member in an open state together with the vehicle body around the cover member;
Fig. 12 is a perspective view illustrating the shape of a drive member;
Fig. 12A is a perspective view illustrating the shape of the cover member;
Fig. 13 is a perspective view illustrating a positional relationship between the cover member and the drive member in a state where the opening degree of the cover member is 25%;
Fig. 13A is a perspective view illustrating a positional relationship between the cover member and the drive member in a state where the opening degree of the cover member is 76%;
Fig. 13B is a perspective view illustrating a positional relationship between the cover member and the drive member in a state where the opening degree of the cover member is 83%;
Fig. 13C is a perspective view illustrating a positional relationship between the cover member and the drive member in a state where the opening degree of the cover member is 87%;
Fig. 13D is a perspective view illustrating a positional relationship between the cover member and the drive member in a state where the opening degree of the cover member is 90%;
Fig. 13E is a perspective view illustrating a positional relationship between the cover member and the drive member in a state where the opening degree of the cover member is 100%;
Fig. 14 is a cross-sectional view on a plane passing through a part where the cover member and the drive member abut on each other in a state where the opening degree of the cover member is 25%;
Fig. 14A is a cross-sectional view on a plane passing through a part where the cover member and the drive member abut on each other in a state where the opening degree of the cover member is 76%;
Fig. 14B is a cross-sectional view on a plane passing through a part where the cover member and the drive member abut on each other in a state where the opening degree of the cover member is 83%;
Fig. 14C is a cross-sectional view on a plane passing through a part where the cover member and the drive member abut on each other in a state where the opening degree of the cover member is 87%;
Fig. 14D is a cross-sectional view on a plane passing through a part where the cover member and the drive member abut on each other in a state where the opening degree of the cover member is 90%;
Fig. 14E is a cross-sectional view on a plane passing through a part where the cover member and the drive member abut on each other in a state where the opening degree of the cover member is 100%;
Fig. 15 is a perspective view of a main part of a slide door support structure according to Embodiment 2;
Fig. 16 is a perspective view of a cover member according to Embodiment 2 as viewed from the vehicle inner side;
Fig. 17 is a perspective view of a lock mechanism according to Embodiment 2;
Fig. 18 is a perspective view illustrating an unlocked state of the slide door support structure according to Embodiment 2;
Fig. 19 is a perspective view of a slide door support structure according to Embodiment 3 in a door closed state;
Fig. 20 is a perspective view of the slide door support structure according to Embodiment 3 in a door open state;
Fig. 21 is a perspective view illustrating a mechanism arrangement portion in the vehicle body;
Fig. 22 is a perspective view of a cover member according to Embodiment 3 as viewed from the vehicle inner side;
Fig. 23 is a perspective view of a main part of a second slide support mechanism according to Embodiment 3 in the door closed state; and
Fig. 24 is a perspective view of the main part of the second slide support mechanism according to Embodiment 3 in the door open state.

### DETAILED DESCRIPTION

Hereinafter, each embodiment will be described in detail with reference to the accompanying drawings. Note that the dimensional ratios in the drawings are merely examples, and the dimensional ratios are not limited thereto, and shapes and the like in the drawings may be partially exaggerated for convenience of description. In addition, in the drawings, only some of a plurality of parts having the same attribute may be denoted by reference signs for the sake of clarity.

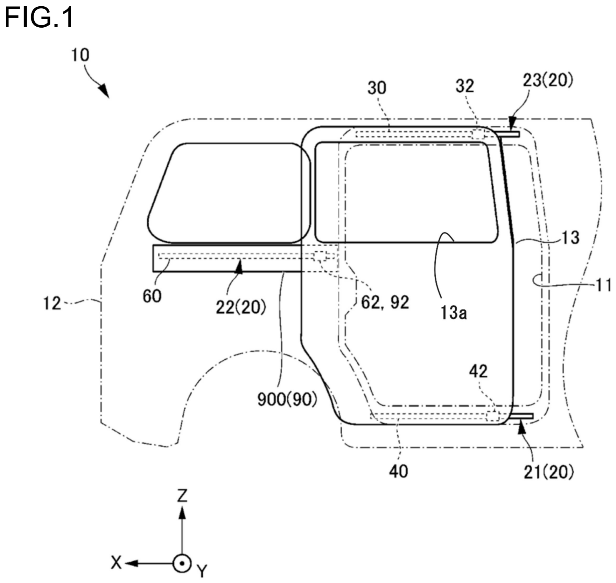

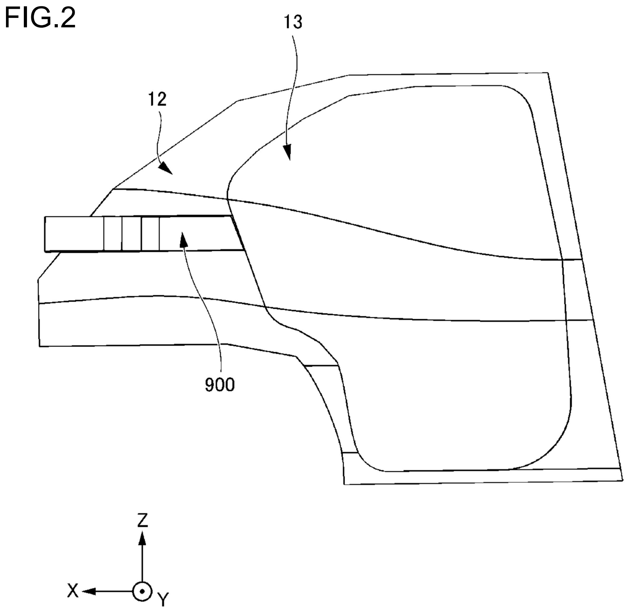

Fig. 1 is a side view schematically illustrating a part of a vehicle 10 including a slide door support structure 20 of the present embodiment. Fig. 1 illustrates three orthogonal axes (X-axis, Y-axis, and Z-axis) in a right-handed coordinate system. In the present embodiment, the X direction corresponds to the vehicle front-rear direction, and the positive side in the X direction corresponds to the rear side. The Y direction corresponds to the vehicle width direction, and the positive side in the Y direction corresponds to the outer side (side away from the center of the vehicle body). The Z direction corresponds to the vertical direction, and the positive side in the Z direction corresponds to the upper side. The same coordinate system is illustrated in the same relationship in Fig. 2 and subsequent drawings. Hereinafter, the vehicle outer side corresponds to the positive side in the Y direction, and the vehicle inner side corresponds to the negative side in the Y direction.

As illustrated in Fig. 1, the vehicle 10 includes a vehicle body 12 provided with a door opening 11 in a side surface, a door 13 that opens and closes the door opening 11, and the slide door support structure 20 that slidably supports the door 13 on the vehicle body 12.

The door 13 opens and closes between a fully closed position where an occupant is restricted from getting on and off the vehicle 10 through the door opening 11 and a fully open position where the occupant can get on and off the vehicle 10 through the door opening 11. In the following description, the degree of opening of the door 13 is also referred to as the opening degree of the door 13. That is, the opening degree of the door 13 is the minimum at the fully closed position and the maximum at the fully open position. In the present embodiment, the door 13 may be a slide door manually operated by a user of the vehicle 10 or may be an electric door.

In the present embodiment, the slide door support structure 20 includes a first slide support mechanism 21, a second slide support mechanism 22, and a third slide support mechanism 23. Note that in a modification, part of the first slide support mechanism 21 to the third slide support mechanism 23 may be omitted or simplified.

The first slide support mechanism 21 includes a lower slide rail 40 and a lower guide unit 42. The lower slide rail 40 may be disposed below the door opening 11 (for example, near the lower end of the door opening 11). The lower guide unit 42 may be connected to a place near the front end of the door 13. The first slide support mechanism 21 regulates the opening/closing track of the door 13 while supporting the door 13 on the vehicle body 12 through the lower slide rail 40 and the lower guide unit 42.

Note that the configuration of the first slide support mechanism 21 (the configuration of each of the lower slide rail 40 and the lower guide unit 42) is arbitrary, and for example, the configuration described in JP 2018-80468 A or JP 2020-79513 A, which may be incorporated into the content of the present specification by reference herein, may be used.

The second slide support mechanism 22 includes a central slide rail 60, a central guide unit 62, and a cover mechanism 90.

The central slide rail 60 may be disposed, for example, in a recess formed in a recess in the vehicle body 12. The central slide rail 60 is disposed below the upper end of the door opening 11 and above the lower end of the door opening 11. In the present embodiment, the central slide rail 60 is disposed at the rear of the door opening 11. Note that the central slide rail 60 is positioned above the lower slide rail 40 in the vehicle and below a window frame 13a provided on the door 13 in the vehicle in the vertical direction.

The central guide unit 62 is provided for the central slide rail 60. The central guide unit 62 may be connected to a place that is located at a central portion of the door 13 in the vehicle vertical direction and is near the rear end of the door 13.

The cover mechanism 90 includes a cover member 900 and a cover drive mechanism 92.

The cover member 900 has a function of reducing visibility of the central slide rail 60 and the like seen from the outside in the closed state of the door 13. Details of the cover member 900 will be described later with reference to Fig. 2 and subsequent drawings.

The cover drive mechanism 92 drives the cover member 900 in conjunction with movement of the central guide unit 62. Details of the cover drive mechanism 92 will be described later together with the cover member 900 with reference to Fig. 2 and subsequent drawings.

The third slide support mechanism 23 includes an upper slide rail 30 and an upper guide unit 32. The upper slide rail 30 may be disposed above the door opening 11 (for example, near the upper end of the door opening 11). The upper guide unit 32 may be connected to a place near the front end of the door 13. The third slide support mechanism 23 regulates the opening/closing track of the door 13 while supporting the door 13 on the vehicle body 12 through the upper slide rail 30 and the upper guide unit 32.

Note that the configuration of the third slide support mechanism 23 (the configuration of each of the upper slide rail 30 and the upper guide unit 32) is arbitrary, and for example, the configuration described in JP 2018-80468 A or JP 2020-79513 A, which may be incorporated into the content of the present specification by reference herein, may be used.

Note that in the present embodiment, the door 13 is for a rear seat, but the slide door support structure 20 of the present embodiment can be applied to any door. Further, the door 13 is a type that slides backward, but may be a type that slides forward.

Next, the second slide support mechanism 22 and the cover mechanism 90 thereof will be described in detail with reference to Fig. 2 and subsequent drawings.

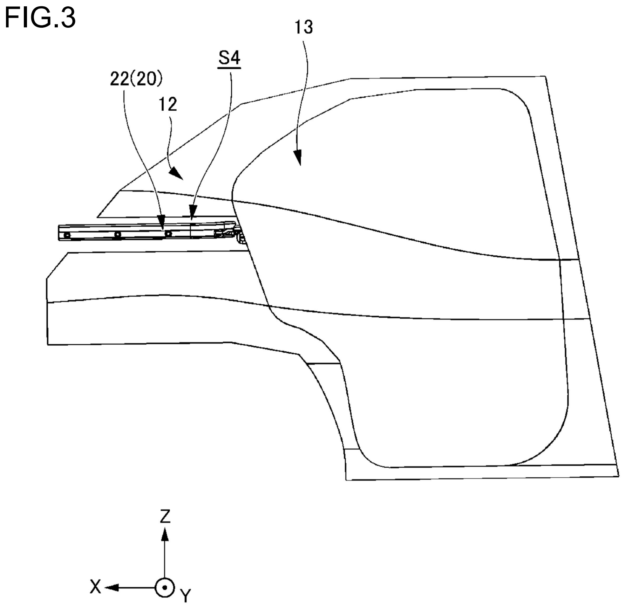

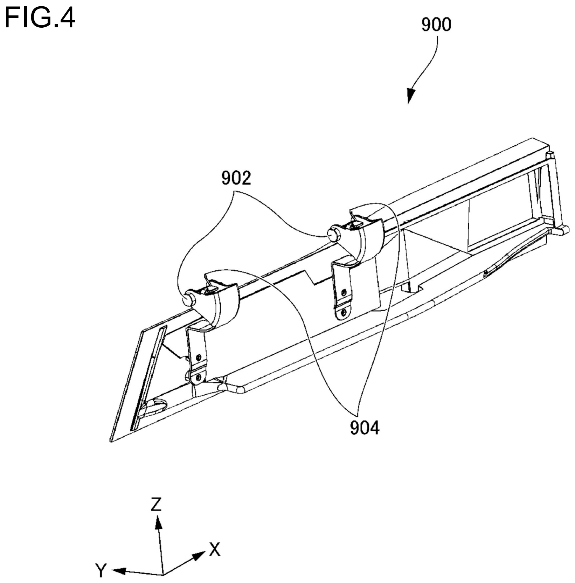

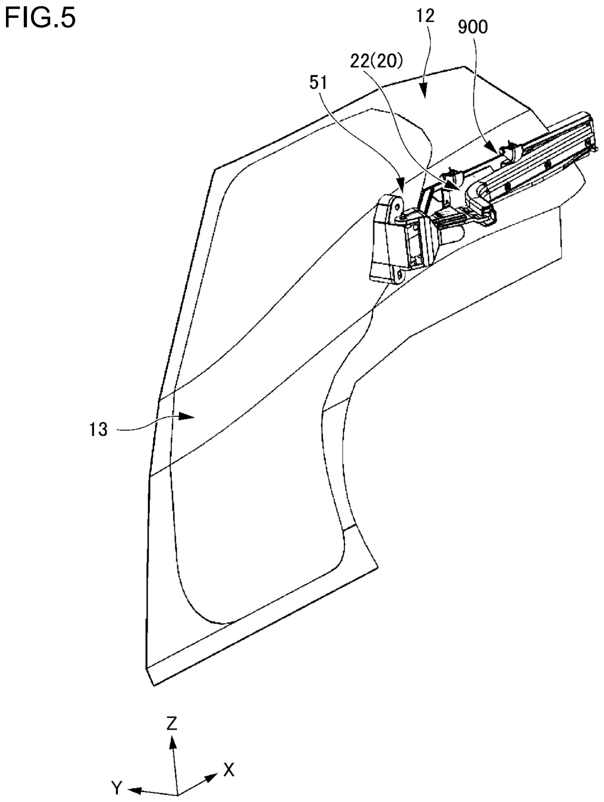

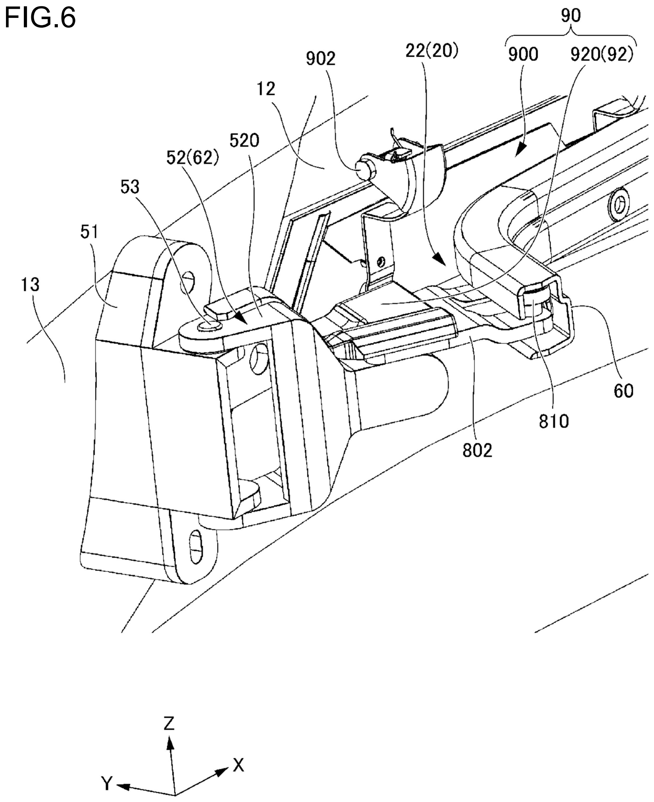

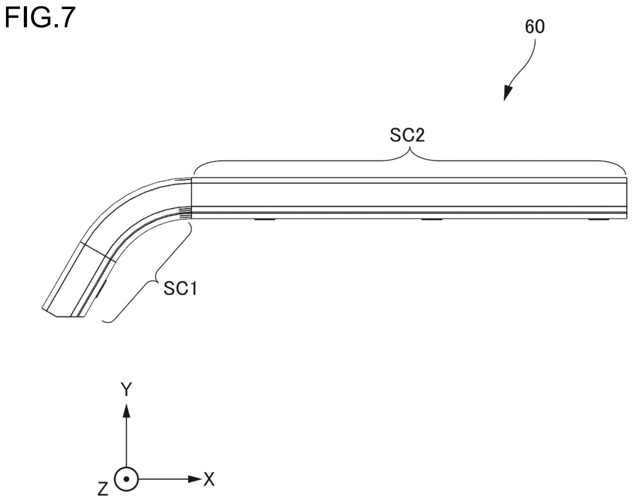

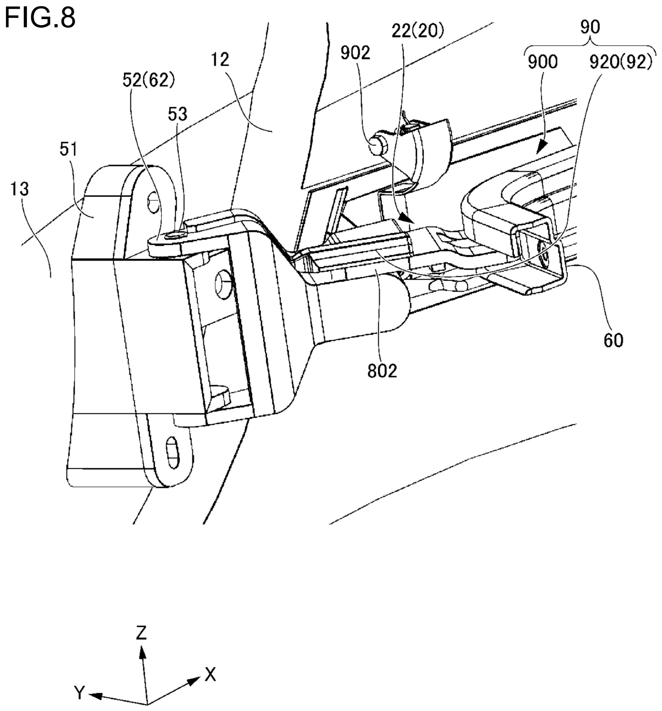

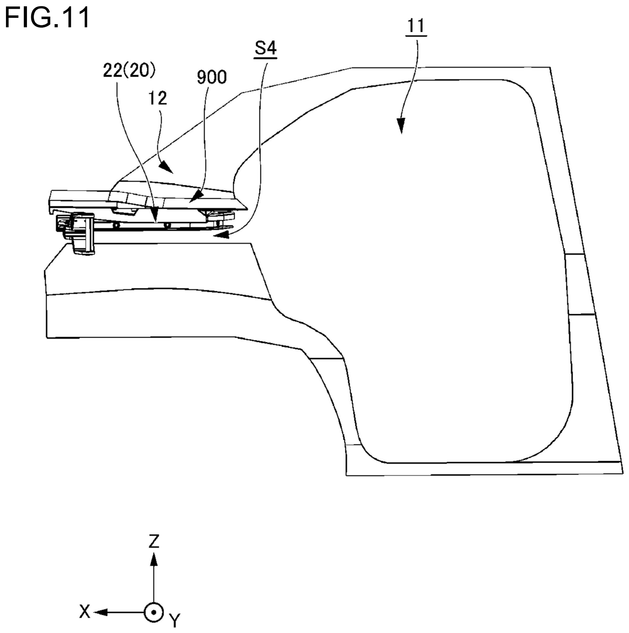

Fig. 2 is an explanatory view of the second slide support mechanism 22 and the cover mechanism 90 thereof, and is a side view illustrating an appearance example of the door 13 in the fully closed state and the vehicle body 12 around the door 13. Fig. 3 is a side view illustrating a state in which the cover member 900 is removed from the state of Fig. 2. Fig. 4 is a perspective view of the cover member 900 as viewed from the inner side in the vehicle width direction. Fig. 5 is a perspective view of the state of Fig. 2 as viewed from the inner side in the vehicle width direction. Fig. 6 is an enlarged view of a part of Fig. 5. Fig. 7 is a plan view illustrating a top view of the central slide rail 60. Figs. 8 to 10 are explanatory views of operation of the cover drive mechanism 92. Fig. 11 is a side view illustrating the state of the cover member 900 in an open state together with the vehicle body 12 around the cover member 900. Note that in Fig. 11, the door 13 is not illustrated.

The central slide rail 60 mainly has a function of regulating the opening/closing track of the door 13 while receiving the weight of the door 13 in cooperation with the central guide unit 62 to be described later.

As illustrated in Fig. 7, the central slide rail 60 may form an initial guide section SC1 for moving the door 13 in the closed state to the outer side in the vehicle width direction and a main guide section SC2 for moving the door 13 toward the rear of the vehicle in the vehicle front-rear direction. Note that the boundary between the initial guide section SC1 and the main guide section SC2 may not be strict, and may be continuous with a curved portion interposed therebetween.

The central guide unit 62 includes a vehicle body-side hinge portion 52 rotatably coupled to a door-side hinge portion 51. The door-side hinge portion 51 is fixed to a door 13 side. The door-side hinge portion 51 and the vehicle body-side hinge portion 52 are connected so as to be rotatable about a rotation shaft 53 in the vertical direction. Note that the door-side hinge portion 51 and the vehicle body-side hinge portion 52 have substantially no degree of freedom other than rotation around the rotation shaft 53.

The central guide unit 62 includes an upper roller holding member 802 formed as a part of the vehicle body-side hinge portion 52. Note that in the present embodiment, the vehicle body-side hinge portion 52 is formed by integrally coupling a plurality of members, but may be formed of one piece. The upper roller holding member 802 rotatably holds various rollers 810. The various rollers 810 are movable while rotating along the central slide rail 60.

Note that the number and type of the various rollers 810 are arbitrary, and for example, the configurations described in JP 2018-80468 A and JP 2020-79513 A, which may be incorporated into the content of the present specification by reference herein, may be used.

The cover drive mechanism 92 drives the cover member 900.

As can be seen from comparison between Figs. 2 and 3, the cover member 900 forms a design surface of the vehicle body 12, and mainly has a function of making the second slide support mechanism 22 invisible or hardly visible from the outside. In addition, the cover member 900 has a function of reducing adverse effects (for example, intrusion of rain, snow, foreign matter, and the like, and performance degradation associated therewith) caused by the second slide support mechanism 22 being exposed to the outside.

For this purpose, the cover member 900 is supported by the vehicle body 12 so as to at least partially close a mechanism arrangement portion S4 (Fig. 3) on the vehicle body side of the second slide support mechanism 22.

Incidentally, in a case where the cover member 900 described above is provided, the mechanism arrangement portion S4 (Fig. 3) on the vehicle body side can be at least partially closed, but there is a possibility that movement of the door 13 with the aid of the second slide support mechanism 22 is hindered. In other words, in order not to hinder movement of the door 13 with the aid of the second slide support mechanism 22, conventionally, the mechanism arrangement portion S4 on the vehicle body side is not provided with a cover, or a cover that sufficiently hides the mechanism arrangement portion S4 on the vehicle body side cannot be provided.

On the other hand, in the present embodiment, the cover member 900 is movable between a closed position (an example of a second position) illustrated in Fig. 2 and an open position (an example of a first position) to be described later. The cover drive mechanism 92 is provided to enable the cover member 900 to be mechanically moved from the closed position to the open position in conjunction with movement of the door 13. Hereinafter, such a characteristic configuration of the present embodiment will be described in detail.

In the present embodiment, the cover member 900 is supported by the vehicle body 12 so as to be rotatable about a rotation shaft 902. The rotation shaft 902 may be substantially parallel to the vehicle front-rear direction. The rotation shaft 902 may be disposed above the cover member 900. In this case, the cover member 900 is rotatable such that the lower side protrudes to the vehicle outer side.

The cover member 900 is biased to rotate to the closed position by a spring 904. The spring 904 may be in the form of a spring provided around the rotation shaft 902.

The surface of the cover member 900 on the vehicle outer side forms a design surface. For example, the cover member 900 may be flush with an outer panel around the vehicle body 12 when the cover member 900 is in the closed position (that is, there is substantially no step) to form a continuous design surface.

In the present embodiment, the cover drive mechanism 92 is incorporated in a vehicle body-side mechanism of the second slide support mechanism 22.

Specifically, the cover drive mechanism 92 includes a drive member 920 formed as a part of the vehicle body-side hinge portion 52. Note that in the present embodiment, the drive member 920 is coupled to a main body portion 520 of the vehicle body-side hinge portion 52, but may be formed integrally with the main body portion 520.

The drive member 920 is a part of the vehicle body-side hinge portion 52, and moves along with movement of the door 13 to the open state. Then, on the basis of the movement of the drive member 920, the drive member 920 comes into contact with the vehicle inner side of the cover member 900 and applies a driving force to the cover member 900. The driving force is a force in a direction of pushing the cover member 900 to the vehicle outer side, and generates a moment around the rotation shaft 902 in a direction of rotating the cover member 900 to the open position. The magnitude and direction of the driving force are determined according to the positional relationship, the contact mode, and the like between the drive member 920 and the cover member 900. Note that the biasing force of the spring 904 as resistance to the driving force is adapted in relation to an appropriate driving force. That is, the biasing force of the spring 904 may be adapted to allow the cover member 900 to move to the open position with a suitable driving force.

Specifically, Fig. 8 illustrates a state where the drive member 920 starts to contact the cover member 900. The drive member 920 may be already in contact with the cover member 900 in the closed position in the closed state of the door 13 to generate the driving force, but preferably, as illustrated in Fig. 8, the drive member 920 starts to generate the driving force after the door 13 has moved to the outer side in the vehicle width direction. That is, the positional relationship and the like between the drive member 920 and the cover member 900 are preferably adapted such that the cover member 900 is moved to the open position by the drive member 920 after the door 13 has moved to the outer side in the vehicle width direction. As a result, movement of the cover member 900 to the open position and movement of the door 13 to the outer side in the vehicle width direction are prevented from simultaneously occurring, and the likelihood of interference between the cover member 900 and the door 13 can be reduced. In other words, the cover member 900 can be started to move to the open position in a mode (timing) in which movement of the door 13 is not hindered. Note that when the door 13 has been moved to the outer side in the vehicle width direction, the gap in the vehicle width direction between the vehicle body 12 and the door 13 becomes relatively large, so that the degree of freedom in designing regarding movement of the cover member 900 in a mode not interfering with the door 13 is increased.

Note that in the present embodiment, the drive member 920 does not contact the cover member 900 in the closed position in the closed state of the door 13, but in a modification, the drive member 920 may be already in contact with the cover member 900 in the closed position in the closed state of the door 13. That is, the drive member 920 and the cover member 900 may be always in contact with each other regardless of the opening degree of the door 13. Also in this case, by adapting the positional relationship and the contact mode between the drive member 920 and the cover member 900 according to the opening degree of the door 13, it is possible to realize a driving force generation mode in which the cover member 900 starts to move to the open position after the door 13 has moved to the outer side in the vehicle width direction.

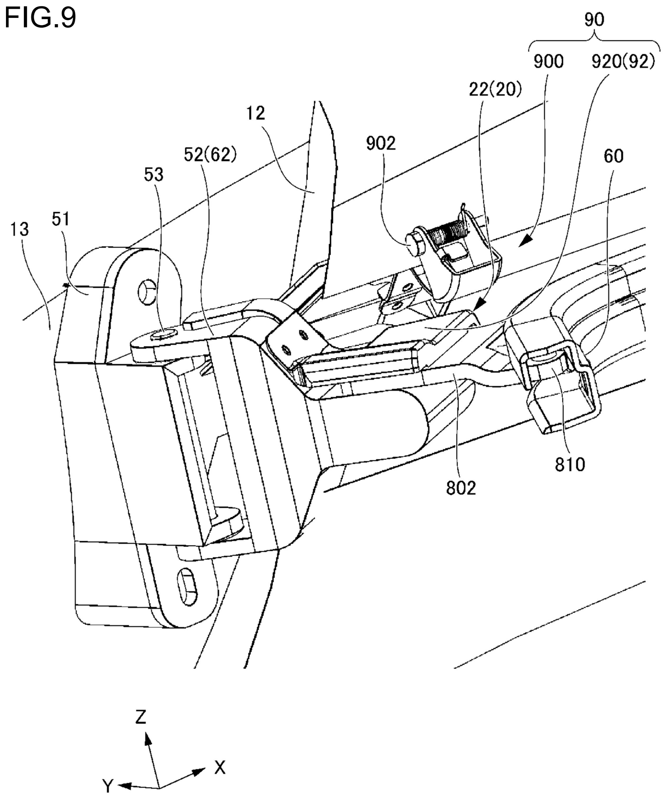

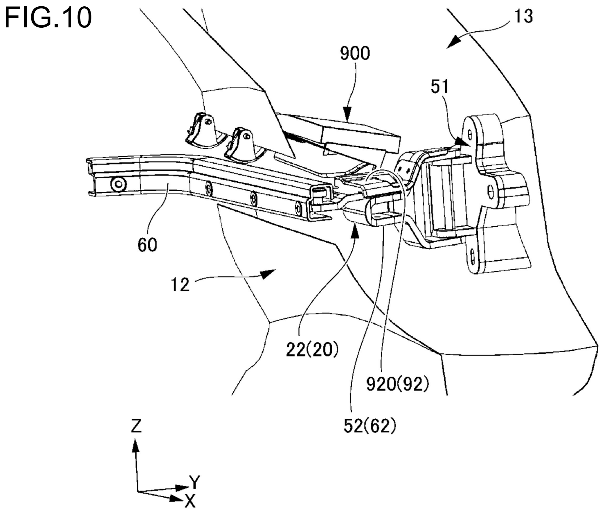

Fig. 9 illustrates a state in which the drive member 920 pushes out the cover member 900 to the vicinity of the intermediate position, and Figs. 10 and 11 illustrate a state in which the drive member 920 pushes out the cover member 900 to the open position.

In the present embodiment, for example, a state in which the drive member 920 pushes out the cover member 900 to the open position in the vicinity of the start position of the main guide section SC2 (position of the end portion on the initial guide section SC1 side) may be realized.

Note that in Fig. 11, the door 13 is not illustrated. In practice, the door 13 covers the cover member 900 from the vehicle outer side. Therefore, even in the state of Fig. 11 (state in which the cover member 900 is in the open position), the portion of the second slide support mechanism 22 that might be visible if the cover member 900 is in the open position is still invisible when viewed from the outside of the door 13 in the vehicle width direction.

When the door 13 returns from the open state to the closed state, the cover member 900 moves from the open position to the closed position when the driving force from the drive member 920 falls below the biasing force from the spring 904.

As described above, according to the present embodiment, when the door 13 transitions to the open state, the cover member 900 can be moved to the open position so as not to hinder the movement of the door 13 at that time. Therefore, according to the present embodiment, the cover member 900 can reduce the visibility (external exposure degree) of the slide support mechanism in the closed state of the door 13 in a mode in which movement of the sliding door 13 is not hindered.

Note that in the present embodiment, the cover member 900 is adapted so that there is substantially no gap or step between the cover member 900 and the vehicle body 12 in the closed position of the cover member 900, but it is sufficient if the gap or step between the cover member 900 and the vehicle body 12 in the closed position of the cover member 900 is smaller than that in the open position of the cover member 900. That is, the gap or step between the cover member 900 and the vehicle body 12 may significantly exist in the closed position of the cover member 900 as long as the gap or step between the cover member 900 and the vehicle body 12 is smaller than that in the open position of the cover member 900.

Next, details of the shapes and functions of the drive member 920 and the cover member 900 related to control of the opening degree of the cover member 900 will be described.

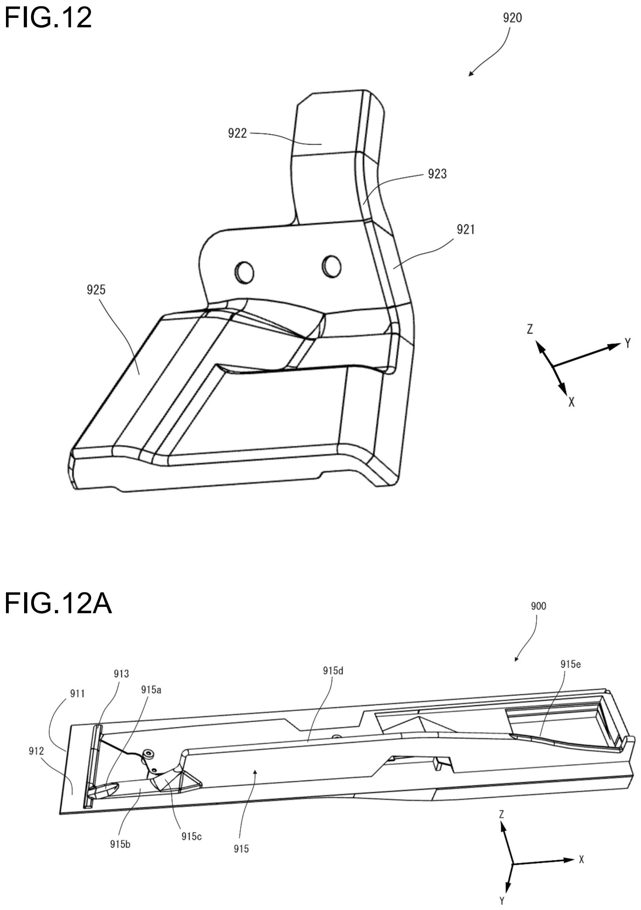

Fig. 12 is a perspective view illustrating the shape of the drive member 920, and Fig. 12A is a perspective view illustrating the shape of the cover member 900. Note that the coordinate systems illustrated in Figs. 12 and 12A correspond to a case where the door 13 is in the closed state.

As illustrated in Fig. 12, the drive member 920 includes an abutting surface 921 formed on a right side portion in Fig. 12, a corner portion 923 continuous with the abutting surface 921, and an abutting surface 922 formed continuous with the abutting surface 921 with the corner portion 923 interposed therebetween. Note that the abutting surface 921, the corner portion 923, and the abutting surface 922 are names given for convenience of description, are formed as a curved surface and a flat surface continuous with each other, and do not have a clear boundary. Further, the drive member 920 includes an abutting surface 925 formed on the left side in Fig. 12.

The abutting surface 921 and the corner portion 923 of the drive member 920 function as a first part that pushes the cover member 900 to the outer side in the vehicle width direction when the opening degree of the door 13 is in a first opening degree range in which the opening degree of the door 13 is on the fully closed side with respect to the intermediate opening degree and on the fully open side with respect to the fully closed position. The abutting surface 921 and the corner portion 923 of the drive member 920 constitute a side portion of the drive member 920 facing the outer side in the vehicle width direction when the opening degree of the door 13 is in the first opening degree range.

The abutting surface 922 and the abutting surface 925 of the drive member 920 function as a second part that supports the cover member 900 from below when the opening degree of the door 13 is in a second opening degree range in which the opening degree of the door 13 is on the fully open side with respect to the first opening degree range. Further, the abutting surface 922 and the abutting surface 925 of the drive member 920 constitute an upper portion of the drive member 920 facing upward.

As illustrated in Fig. 12A, the cover member 900 includes an end portion 911 facing the vehicle front direction, a flat portion 912 continuous with the end portion 911, a protrusion 913 extending in the vehicle vertical direction, and a protrusion 915 extending in the vehicle front-rear direction.

The end portion 911, the flat portion 912, and the protrusion 913 of the cover member 900 function as a third part that is brought into contact with the first part of the drive member 920 when the opening degree of the door 13 is in the first opening degree range.

The protrusion 915 of the cover member 900 constitutes a fourth part that is brought into contact with the second part of the drive member 920 when the opening degree of the door 13 is in the second opening degree range.

The protrusion 915 includes an abutting portion 915a, an abutting portion 915b, an intermediate portion 915c, an abutting portion 915d, and an abutting portion 915e. As illustrated in Fig. 12A, the abutting portion 915a is connected to the protrusion 913, and has a shape in which a height (protruding height) in the vehicle width direction increases from a height equivalent to that of the protrusion 913 to a height equivalent to that of the abutting portion 915b as it proceeds to the rear of the vehicle. The abutting portion 915b is connected to the abutting portion 915a and has a shape extending toward the rear of the vehicle while maintaining the height in the vehicle width direction. The intermediate portion 915c is connected to the abutting portion 915b, and has a shape in which a height in the vehicle width direction increases from a height equivalent to that of the abutting portion 915b to a height equivalent to that of the abutting portion 915d as it proceeds to the rear of the vehicle. The abutting portion 915d is connected to the intermediate portion 915c and has a shape extending toward the rear of the vehicle while maintaining the height in the vehicle width direction. The abutting portion 915e is connected to the abutting portion 915d, and has a shape in which a height in the vehicle width direction decreases from a height equivalent to that of the abutting portion 915b as it proceeds to the rear of the vehicle.

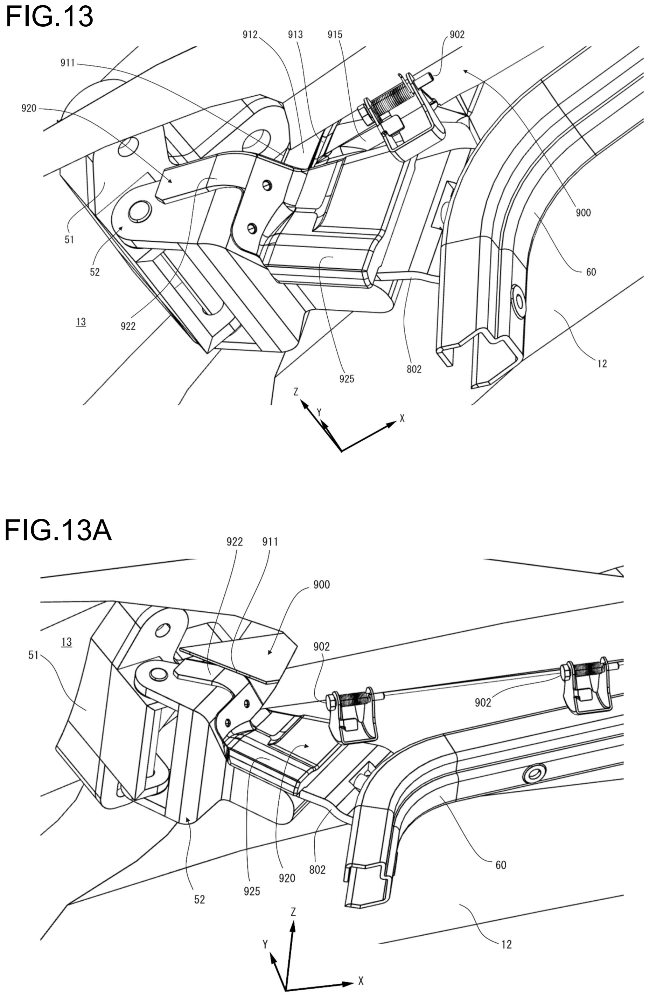

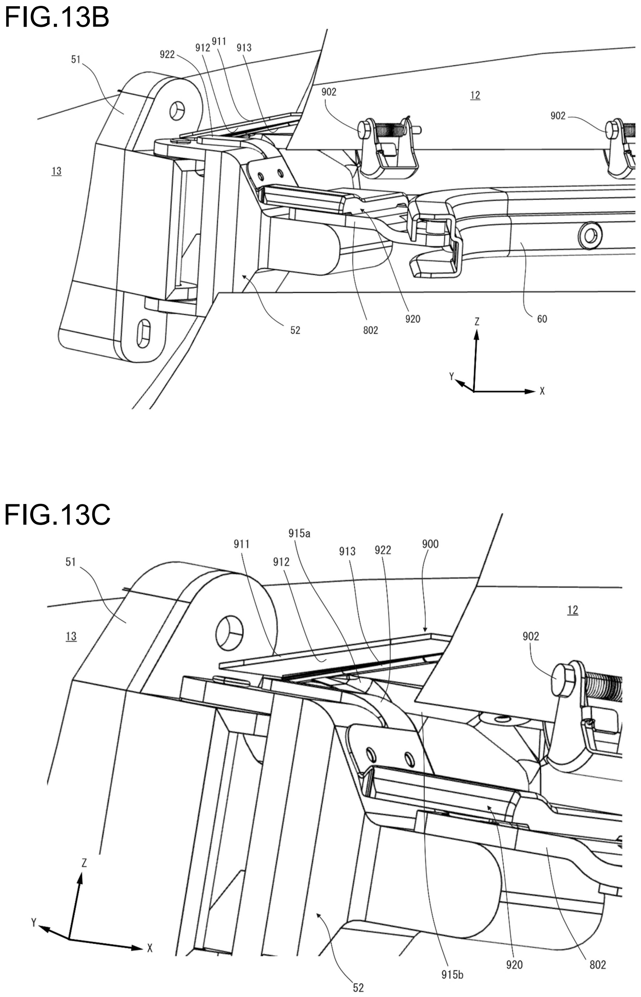

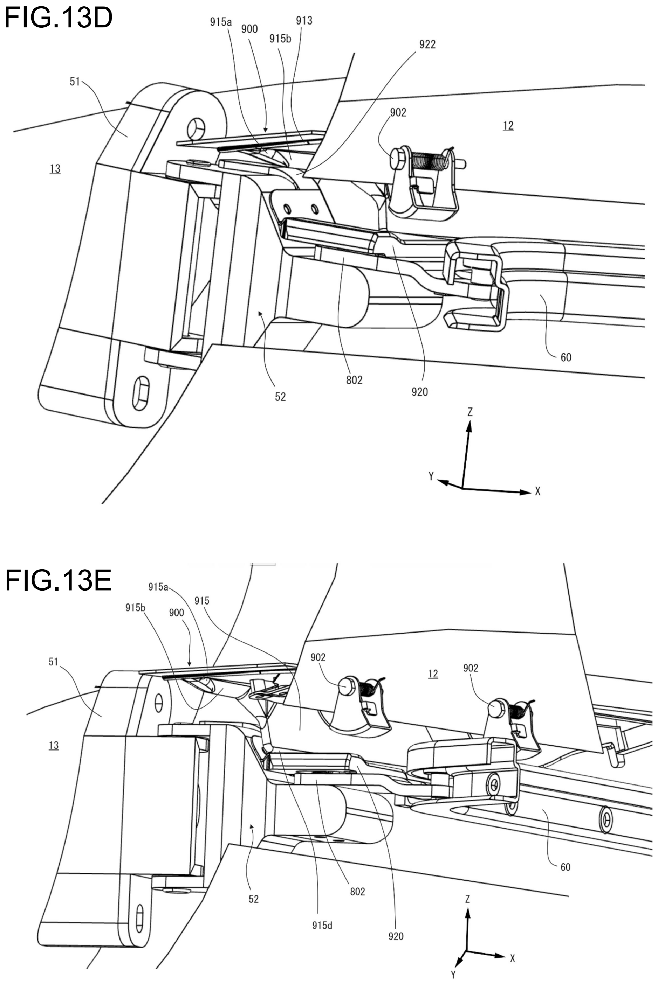

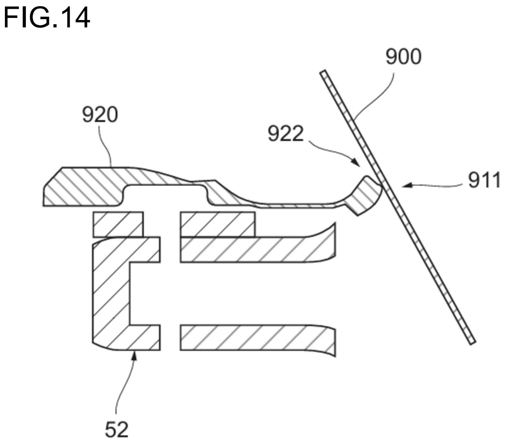

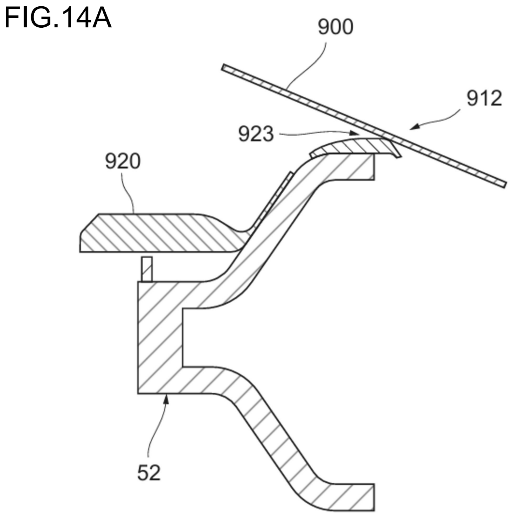

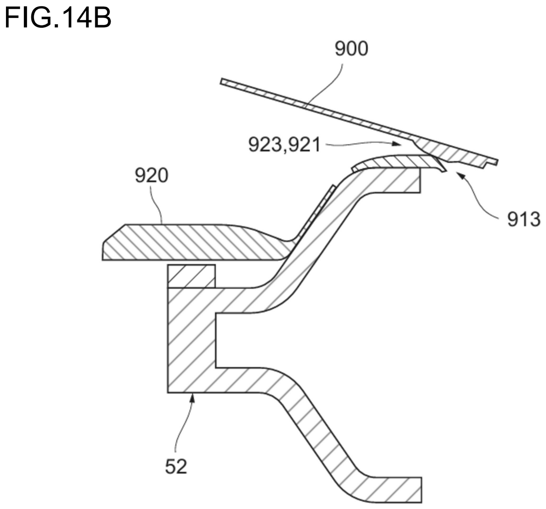

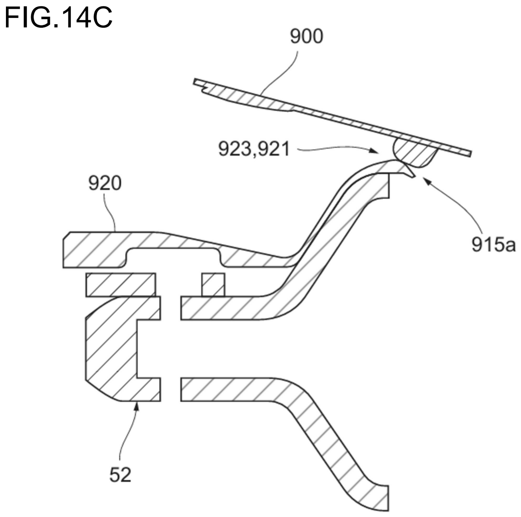

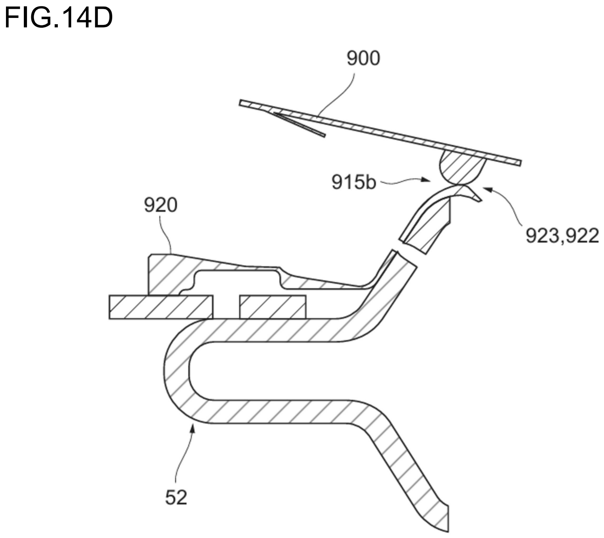

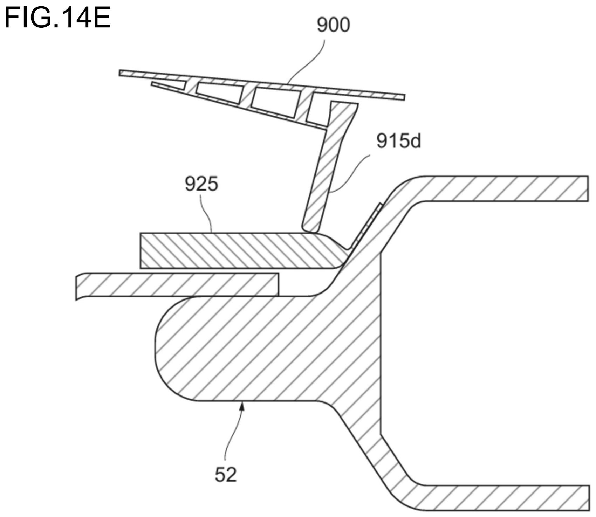

Figs. 13 to 13E are perspective views illustrating positional relationships between the cover member 900 and the drive member 920, and Figs. 14 to 14E are cross-sectional views in a plane passing through a part where the cover member 900 and the drive member 920 abut on each other.

Here, Figs. 13 and 14 illustrate a state in which the opening degree of the cover member 900 is 25%. Figs. 13A and 14A illustrate a state in which the opening degree of the cover member 900 is 76%. Figs. 13B and 14B illustrate a state in which the opening degree of the cover member 900 is 83%. Figs. 13C and 14C illustrate a state in which the opening degree of the cover member 900 is 87%. Figs. 13D and 14D illustrate a state in which the opening degree of the cover member 900 is 90%. Figs. 13E and 14E illustrate a state in which the opening degree of the cover member 900 is 100%. Note that the opening degree of the cover member 900 corresponds to the angle of the cover member 900 around the rotation shaft 902.

Hereinafter, the positional relationship between the cover member 900 and the drive member 920 when the door 13 is moved from the closed state to the open state will be described.

When the door 13 in the fully closed state is moved toward the fully open state, as illustrated in Figs. 13 and 14, the abutting surface 921 of the drive member 920 abuts on the end portion 911 of the cover member 900, and the cover member 900 in the closed state starts to rotate toward the open state.

When the door 13 is further moved in the opening direction, as illustrated in Figs. 13A and 14A, the corner portion 923 of the drive member 920 abuts on the flat portion 912 of the cover member 900, and the cover member 900 is further rotated toward the open state.

Next, as illustrated in Figs. 13B and 14B, the corner portion 923 or the abutting surface 921 of the drive member 920 abuts on the protrusion 913 of the cover member 900, and the cover member 900 is further rotated toward the open state.

Next, as illustrated in Figs. 13C and 14C, the corner portion 923 or the abutting surface 921 of the drive member 920 abuts on the abutting portion 915a of the protrusion 915 of the cover member 900, and the cover member 900 is further rotated toward the open state.

Next, as illustrated in Figs. 13D and 14D, the corner portion 923 or the abutting surface 922 of the drive member 920 abuts on the abutting portion 915b of the protrusion 915 of the cover member 900, and the cover member 900 is further rotated toward the open state.

Next, as illustrated in Figs. 13E and 14E, the abutting surface 925 (Fig. 12, Fig. 13, Fig. 13A) of the drive member 920 abuts on the abutting portion 915d of the protrusion 915 of the cover member 900. At this time, the opening degree of the cover member 900 is 100%.

As described above, when the door 13 is moved from the fully closed state to the fully open state, the part where the cover member 900 and the drive member 920 abuts on each other is sequentially switched while the state in which the cover member 900 and the drive member 920 abut on each other is maintained. As a result, the cover member 900 is driven by the drive member 920 in accordance with the operation of opening the door 13, and the state of the cover member 900 transitions from the closed state to the open state. That is, the opening degree of the cover member 900 is appropriately controlled.

Note that when the door 13 is further opened from the state of Figs. 13E and 14E, the abutting surface 925 of the drive member 920 slides toward the rear of the vehicle while abutting on the abutting portion 915d, and the opening degree of the cover member 900 is maintained at 100%. When the door 13 is further opened, the abutting surface 925 of the drive member 920 slides toward the rear of the vehicle while abutting on the abutting portion 915e. At this time, since the protruding height of the abutting portion 915e decreases as it proceeds to the rear of the vehicle (Fig. 12A), the opening degree of the cover member 900 decreases from 100%. This prevents the cover member 900 from interfering with the door 13 when the door 13 is opened close to the fully open position.

Next, other embodiments that may be implemented instead of the above-described embodiment will be described. Hereinafter, for the sake of distinction, the above-described embodiment is also referred to as "Embodiment 1", and the following other embodiments are referred to as" Embodiment 2" and "Embodiment 3". In the following description of the other embodiments, components that may be similar to those of Embodiment 1 described above are denoted by the same reference signs, and the description thereof may be omitted.

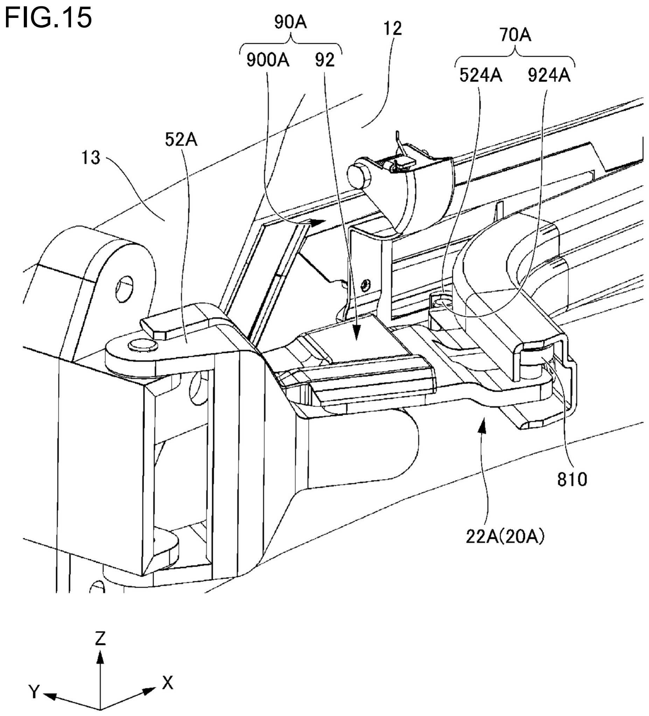

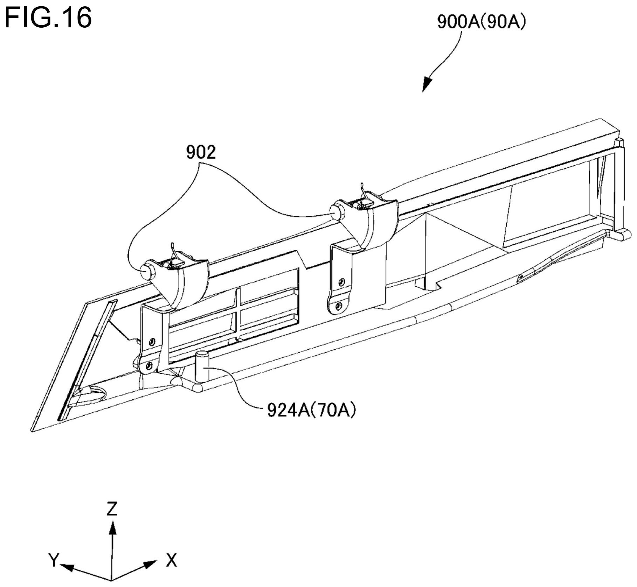

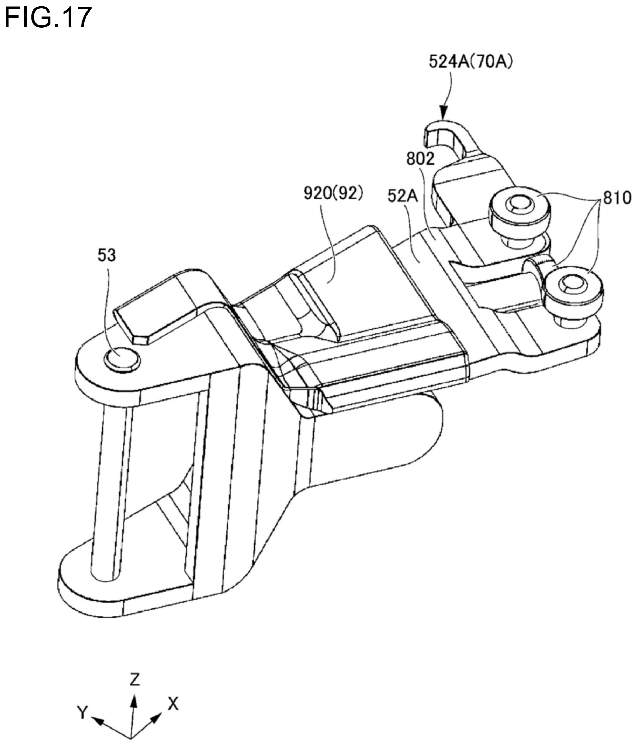

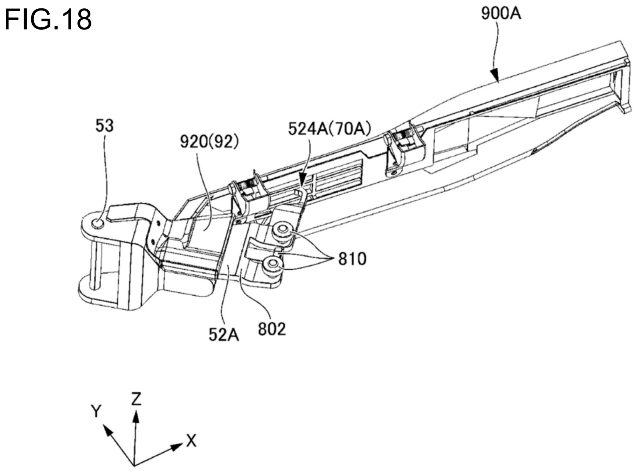

Fig. 15 is a perspective view of a main part of a slide door support structure 20A according to Embodiment 2. Fig. 16 is a perspective view of a cover member 900A according to Embodiment 2 as viewed from the vehicle inner side. Fig. 17 is a perspective view of a lock mechanism 70A according to Embodiment 2. Fig. 18 is a perspective view illustrating an unlocked state of the slide door support structure 20A according to Embodiment 2.

The slide door support structure 20A according to Embodiment 2 is different from the slide door support structure 20 according to Embodiment 1 described above in that the second slide support mechanism 22 and the cover mechanism 90 are replaced with a second slide support mechanism 22A and a cover mechanism 90A, respectively.

The slide door support structure 20A according to Embodiment 2 is different from the slide door support structure 20 according to Embodiment 1 described above in that the lock mechanism 70A is added.

The cover mechanism 90A according to Embodiment 2 is different from the cover mechanism 90 according to Embodiment 1 described above in that the cover member 900 is replaced with the cover member 900A.

The lock mechanism 70A has a function of locking the cover member 900A in a closed position. As a result, in the closed state of the door 13, the cover member 900A can be prevented from moving from the closed position to an open position due to an unintended external force, disturbance, or the like.

The lock mechanism 70A forms the locked state of the cover member 900A (that is, transitions from the unlocked state to the locked state) in mechanical conjunction with movement of the door 13 to the closed state. In addition, the lock mechanism 70A releases the locked state of the cover member 900A in mechanical conjunction with the movement of the door 13 to the open state (described later with reference to Fig. 18). When the locked state is released, the cover drive mechanism 92 of the cover mechanism 90A described above can function.

The configuration of the lock mechanism 70A is arbitrary, but in the illustrated example, the lock mechanism 70A includes an engaging portion 524A provided on a vehicle body-side hinge portion 52A and an engaged portion 924A provided on the cover mechanism 90A.

As illustrated in Fig. 17, the engaging portion 524A is coupled to the upper roller holding member 802. For example, the engaging portion 524A may be located on the vehicle rear side with respect to the various rollers 810 at the open position of the door 13. That is, the engaging portion 524A may be located on the most leading side of the vehicle body-side hinge portion 52A when the door 13 moves to the open state. The form of the engaging portion 524A is arbitrary as long as it can be engaged with the engaged portion 924A, and in the present embodiment, as an example, the engaging portion 524A has a C-shaped hook form in a top view.

As illustrated in Fig. 16, the engaged portion 924A is provided on the vehicle inner side of the cover mechanism 90A. In the present embodiment, the engaged portion 924A may be in the form of a projection in the vertical direction corresponding to the engaging portion 524A in the form of a C-shaped hook.

In the locked state (Fig. 15) in which the engaging portion 524A is engaged with the engaged portion 924A, the cover member 900A cannot move to the open position (rotate around a rotation shaft 902). Then, when the door 13 starts to move toward the open state, the locked state in which the engaging portion 524A is engaged with the engaged portion 924A is released, the cover drive mechanism 92 of the above-described cover mechanism 90A functions, and the cover member 900A starts to move to the open position.

Note that when the door 13 returns from the open state to the closed state, the engaging portion 524A is engaged with the engaged portion 924A, whereby the above-described locked state (Fig. 15) is formed.

According to Embodiment 2 as described above, in addition to the effect of Embodiment 1 described above, an effect that the cover member 900A can be locked to the closed position by the lock mechanism 70A can be obtained. As a result, it is possible to prevent undesired movement of the cover member 900A (movement of the cover member 900A in the closed position to open toward the open position) which may be caused by an unintended external force or the like.

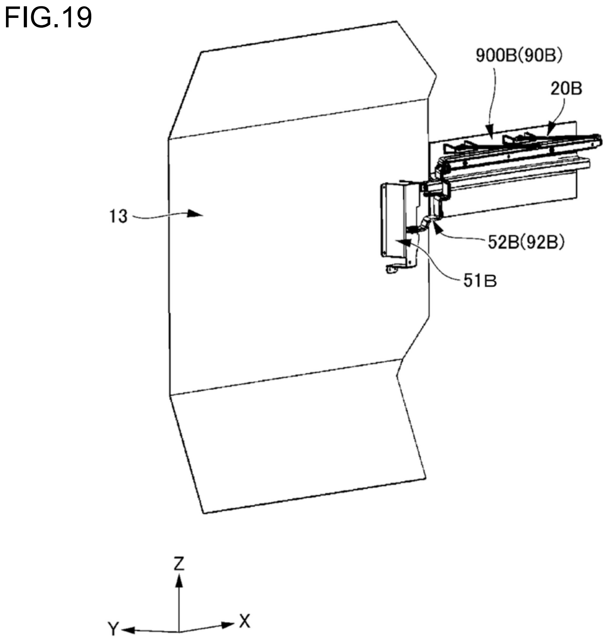

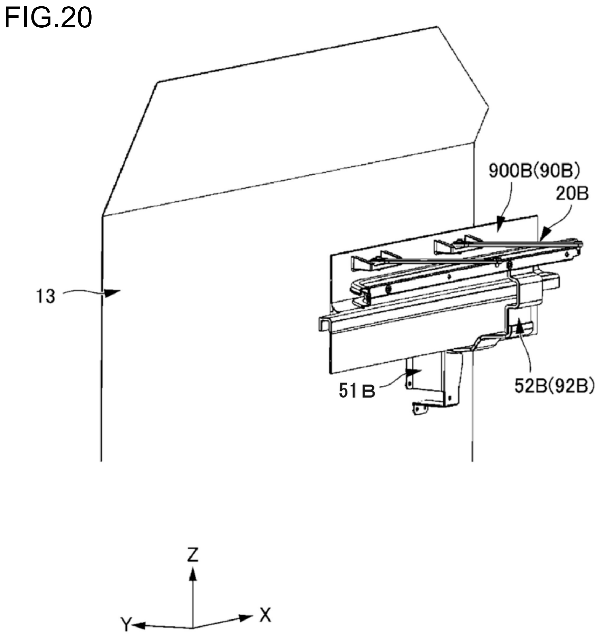

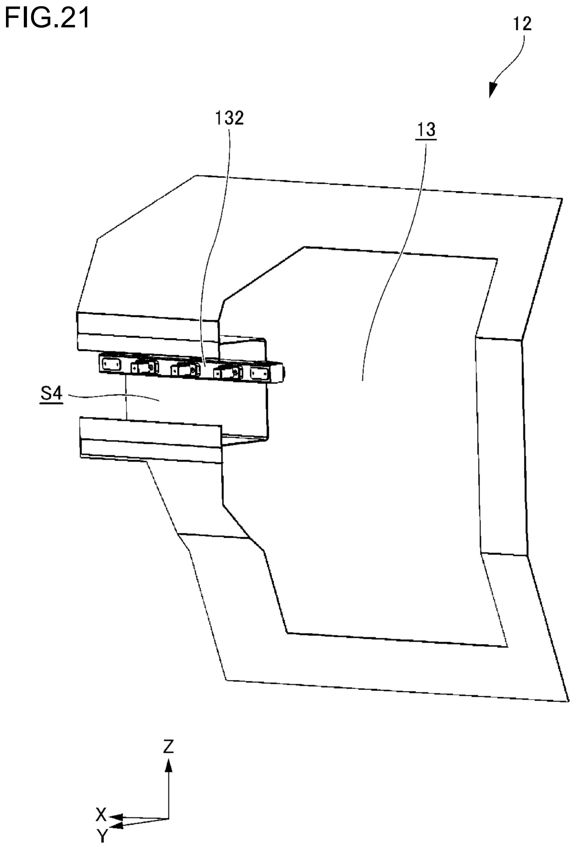

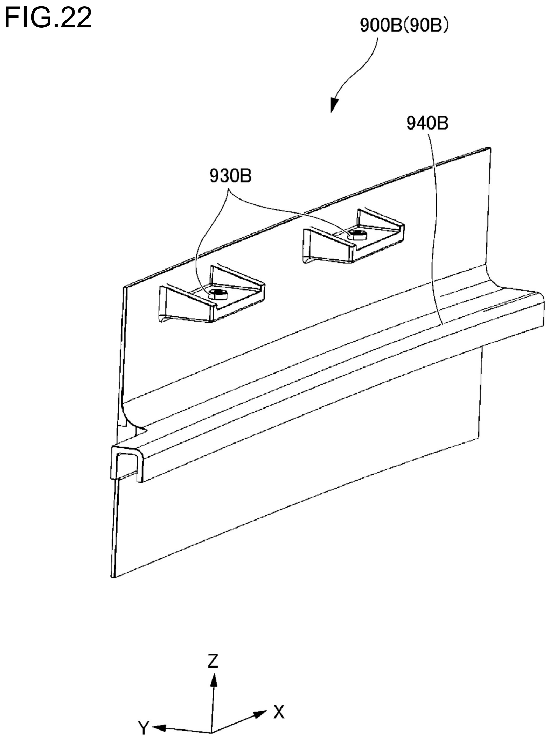

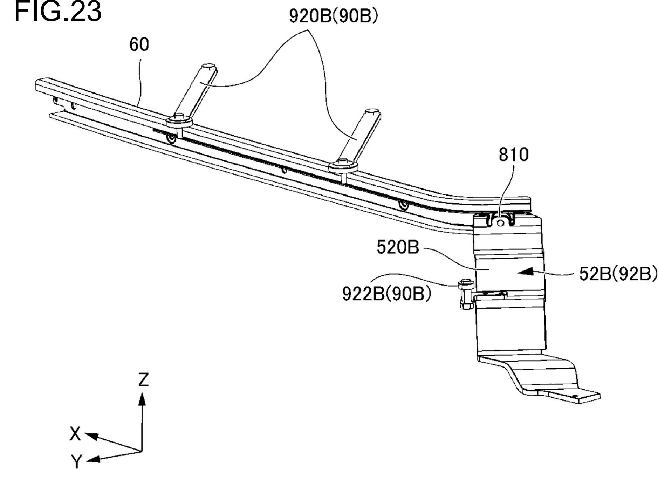

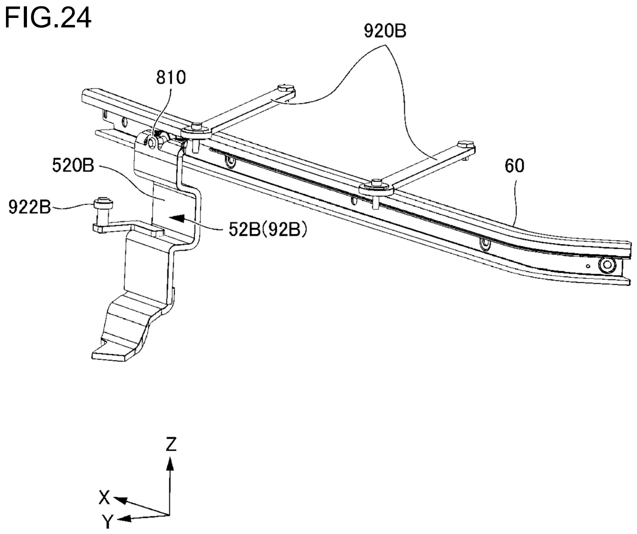

Fig. 19 is a perspective view of a slide door support structure 20B according to Embodiment 3 in the closed state of the door 13. Fig. 20 is a perspective view of the slide door support structure 20B according to Embodiment 3 in the open state of the door 13. Fig. 21 is a perspective view illustrating the mechanism arrangement portion S4 in the vehicle body 12. Fig. 22 is a perspective view of a cover member 900B according to Embodiment 3 as viewed from the vehicle inner side. Fig. 23 is a perspective view of a main part of a second slide support mechanism 22B according to Embodiment 3 in the closed state of the door 13, and Fig. 24 is a perspective view of the main part of the second slide support mechanism 22B according to Embodiment 3 in the open state of the door 13.

The slide door support structure 20B according to Embodiment 3 is mainly different from the slide door support structure 20 according to Embodiment 1 described above in that the cover mechanism 90 is replaced with the cover mechanism 90B.

The cover mechanism 90B according to Embodiment 3 is different from the cover mechanism 90 according to Embodiment 1 described above in that the cover member 900 and the cover drive mechanism 92 are replaced with the cover member 900B and a cover drive mechanism 92B, respectively.

The cover member 900B is rotatably supported on a vehicle body 12 by a link mechanism 920B. A support portion 930B on which one end of the link mechanism 920B is rotatably supported is provided on the vehicle inner side of the cover member 900B. The link mechanism 920B supports the cover member 900B on the vehicle body 12 in a mode in which the cover member 900B is movable between an open position (Fig. 20) and a closed position (Fig. 19). Note that in the illustrated example, the link mechanism 920B includes two links that rotate in the horizontal direction, but another mechanism may be used.

Similarly to the cover member 900 according to Embodiment 1 described above, when the cover member 900B is in the closed position (Fig. 19), the cover member 900B at least partially closes the mechanism arrangement portion S4. The function of the cover member 900B may be similar to that of the cover member 900 according to Embodiment 1 described above. Note that in the example illustrated in Fig. 21, a rail fixing portion 132 may be disposed in the mechanism arrangement portion S4.

The cover member 900B includes a roller guide portion 940B on the vehicle inner side. The roller guide portion 940B may extend in the vehicle front-rear direction.

The cover drive mechanism 92B includes a vehicle body-side hinge portion 52B.

The vehicle body-side hinge portion 52B is rotatably connected to a door-side hinge portion 51B similarly to Embodiment 1 described above. Note that the rotation shaft 53 extends in the vertical direction similarly to Embodiment 1 described above. The vehicle body-side hinge portion 52B rotatably supports the various rollers 810. Note that the various rollers 810 move while rotating along the central slide rail 60. The vehicle body-side hinge portion 52B includes a driving roller 922B. The driving roller 922B is rotatably supported by a main body portion 520B.

The driving roller 922B is movable while rotating along the roller guide portion 940B. Note that the driving roller 922B may have a vertical rotation shaft.

The driving roller 922B is a part of the vehicle body-side hinge portion 52B, and moves while being guided by the roller guide portion 940B along with movement of the door 13 to the open state. On the basis of the movement of the driving roller 922B, the driving roller 922B comes into contact with a wall portion of the roller guide portion 940B on the vehicle outer side and applies the driving force to the cover member 900B through the roller guide portion 940B. The driving force is a force in a direction of pushing the cover member 900B to the vehicle outer side, and generates a moment in a direction in which the link mechanism 920B rotates to move the cover member 900B to the open position. The magnitude and direction of the driving force are determined according to the positional relationship, the contact mode, and the like between the driving roller 922B and the roller guide portion 940B.

Also in Embodiment 3, the effect of Embodiment 1 described above is exhibited.

Although each embodiment has been described in detail above, the present disclosure is not limited to a specific embodiment, and various modifications and changes can be made within the scope described in the claims. In addition, all or a plurality of the components of the above-described embodiments can be combined.

With respect to each of the above embodiments, the following supplements are further disclosed.

### [Supplement 1]

A slide door support structure including:
a slide support mechanism that slidably supports a door that allows a door opening of a vehicle body to be opened and closed, the slide support mechanism including a slide rail in a mechanism arrangement portion on a vehicle body side;
a cover member that is supported by the vehicle body in such a manner as to be movable between a first position where the cover member does not hinder the door from moving with an aid of the slide support mechanism and a second position where the cover member at least partially closes the mechanism arrangement portion; and
a drive mechanism for the cover member,
the cover member being located at the second position in a closed state of the door, and
the drive mechanism moving the cover member from the second position to the first position in mechanical conjunction with movement of the door to an open state.

### [Supplement 2]

The slide door support structure according to Supplement 1, in which the drive mechanism starts movement of the cover member from the second position to the first position after the door has moved to an outer side in a vehicle width direction.

### [Supplement 3]

The slide door support structure according to Supplement 1 or 2,
in which the drive mechanism includes:
a drive member that is provided on a vehicle body-side hinge portion of a hinge mechanism that rotatably supports the door on the vehicle body, and
the drive member includes a first part that pushes the cover member to an outer side in a vehicle width direction when an opening degree of the door is in a first opening degree range in which the opening degree of the door is on a fully closed side with respect to an intermediate opening degree and on a fully open side with respect to a fully closed position, and a second part that supports the cover member from below when the opening degree of the door is in a second opening degree range in which the opening degree of the door is on a fully open side with respect to the first opening degree range.

### [Supplement 4]

The slide door support structure according to Supplement 3,
in which the first part includes a side portion of the drive member that faces the outer side in the vehicle width direction when the opening degree of the door is in the first opening degree range, and
the second part includes an upper portion of the drive member that faces upward.

### [Supplement 5]

The slide door support structure according to Supplement 3,
in which the cover member includes a third part that is brought into contact with the first part of the drive member when the opening degree of the door falls within the first opening degree range, and a fourth part that is brought into contact with the second part of the drive member when the opening degree of the door falls within the second opening degree range, and
the fourth part includes a protrusion that protrudes inward in the vehicle width direction in a state where the cover member is in the second position.

### [Supplement 6]

The slide door support structure according to Supplement 5, in which the protrusion is formed such that a protruding height increases as the opening degree of the door increases toward the fully open side.

### [Supplement 7]

The slide door support structure according to Supplement 3, in which the drive member maintains a contact state with the cover member throughout a period when the opening degree of the door falls within the first opening degree range and a period when the opening degree of the door falls within the second opening degree range.

### [Supplement 8]

The slide door support structure according to Supplement 1,
in which the slide support mechanism includes:
the slide rail that is provided below an upper end of the door opening and above a lower end of the door opening in the vehicle body; and
a roller that moves while rotating along the slide rail,
the roller is rotatably supported by a vehicle body-side hinge portion that is provided between the door and the vehicle body,
the drive mechanism includes the vehicle body-side hinge portion, and
the vehicle body-side hinge portion applies, to the cover member, driving force for realizing movement of the cover member from the second position to the first position on the basis of movement accompanying movement of the door to the open state.

### [Supplement 9]

The slide door support structure according to Supplement 8,
in which the door includes a window frame, and
the slide rail is provided below the window frame in a vertical direction.

### [Supplement 10]

The slide door support structure according to Supplement 1, further including:
a lock mechanism that brings the cover member into a locked state in the second position while the door is stopped in the closed state.

## Claims

1. A slide door support structure (20, 20A, 20B) comprising:
a slide support mechanism (22, 22A, 22B) that slidably supports a door (13) that allows a door opening (11) of a vehicle body (12) to be opened and closed, the slide support mechanism (22, 22A, 22B) including a slide rail (60) in a mechanism arrangement portion (S4) on a vehicle body (12) side;
a cover member (900, 900A, 900B) that is supported by the vehicle body (12) in such a manner as to be movable between a first position where the cover member (900, 900A, 900B) does not hinder the door (13) from moving with an aid of the slide support mechanism (22, 22A, 22B) and a second position where the cover member (900, 900A, 900B) at least partially closes the mechanism arrangement portion (S4); and
a drive mechanism (92, 92B) for the cover member (900, 900A, 900B),
the cover member (900, 900A, 900B) being located at the second position in a closed state of the door (13), and
the drive mechanism (92, 92B) moving the cover member (900, 900A, 900B) from the second position to the first position in mechanical conjunction with movement of the door (13) to an open state.

2. The slide door support structure (20, 20A, 20B) according to Claim 1, wherein the drive mechanism (92, 92B) starts movement of the cover member (900, 900A, 900B) from the second position to the first position after the door (13) has moved to an outer side in a vehicle width direction.

3. The slide door support structure (20, 20A, 20B) according to Claim 1 or 2,
wherein the drive mechanism (92, 92B) includes:
a drive member (920) that is provided on a vehicle body-side hinge portion (52, 52A, 52B) of a hinge mechanism that rotatably supports the door (13) on the vehicle body (12), and
the drive member (920) includes a first part (921, 923) that pushes the cover member (900, 900A, 900B) to an outer side in a vehicle width direction when an opening degree of the door (13) is in a first opening degree range in which the opening degree of the door (13) is on a fully closed side with respect to an intermediate opening degree and on a fully open side with respect to a fully closed position, and a second part (922, 925) that supports the cover member (900, 900A, 900B) from below when the opening degree of the door (13) is in a second opening degree range in which the opening degree of the door (13) is on a fully open side with respect to the first opening degree range.

4. The slide door support structure (20, 20A, 20B) according to Claim 3,
wherein the first part (921, 923) includes a side portion (921, 923) of the drive member (920) that faces the outer side in the vehicle width direction when the opening degree of the door (13) is in the first opening degree range, and
the second part (922, 925) includes an upper portion (922, 925) of the drive member (920) that faces upward.

5. The slide door support structure (20, 20A, 20B) according to Claim 3,
wherein the cover member (900, 900A, 900B) includes a third part (911, 912, 913) that is brought into contact with the first part (921, 923) of the drive member (920) when the opening degree of the door (13) falls within the first opening degree range, and a fourth part (915) that is brought into contact with the second part (922, 925) of the drive member (920) when the opening degree of the door (13) falls within the second opening degree range, and
the fourth part (915) includes a protrusion (915) that protrudes inward in the vehicle width direction in a state where the cover member (900, 900A, 900B) is in the second position.

6. The slide door support structure (20, 20A, 20B) according to Claim 5, wherein the protrusion (915) is formed such that a protruding height increases as the opening degree of the door (13) increases toward the fully open side.

7. The slide door support structure (20, 20A, 20B) according to Claim 3, wherein the drive member (920) maintains a contact state with the cover member (900, 900A, 900B) throughout a period when the opening degree of the door (13) falls within the first opening degree range and a period when the opening degree of the door (13) falls within the second opening degree range.

8. The slide door support structure (20, 20A, 20B) according to Claim 1,
wherein the slide support mechanism (22, 22A, 22B) includes:
the slide rail (60) that is provided below an upper end of the door opening (11) and above a lower end of the door opening (11) in the vehicle body (12); and
a roller (810) that moves while rotating along the slide rail (60),
the roller (810) is rotatably supported by a vehicle body-side hinge portion (52, 52A, 52B) that is provided between the door (13) and the vehicle body (12),
the drive mechanism (92, 92B) includes the vehicle body-side hinge portion (52, 52A, 52B), and
the vehicle body-side hinge portion (52, 52A, 52B) applies, to the cover member (900, 900A, 900B), driving force for realizing movement of the cover member (900, 900A, 900B) from the second position to the first position on a basis of movement accompanying movement of the door (13) to the open state.

9. The slide door support structure (20, 20A, 20B) according to Claim 8,
wherein the door (13) includes a window frame (13a), and
the slide rail (60) is provided below the window frame (13a) in a vertical direction.

10. The slide door support structure (20, 20A, 20B) according to Claim 1, further comprising:
a lock mechanism (70A) that brings the cover member (900, 900A, 900B) into a locked state in the second position while the door (13) is stopped in the closed state.
